# EUROPEAN PATENT APPLICATION

(11) **EP 2 719 554 A1**
(43) Date of publication of application: **16.04.2014**
(21) Application number: 13188347.2
(22) Date of filing: 11.10.2013
(51) Int. Cl.: B60C 27/10

(54) **Anti-skid system**

(30) Priority: 12.10.2012 IT MI20121726
(71) Applicant: MAGGI CATENE S.p.A., 23854 Olginate (Lecco) (IT)
(72) Inventor: Maggi, Corrado, 23896 Sirtori (LC) (IT)
(74) Representative: Faggioni, Carlo Maria

(57) **Abstract**

An anti-sliding system for a vehicle wheel comprising a rolling track, apt to be arranged between the ground and the tread of said wheel, and a retaining arrangement apt to constrain said rolling track to the wheel, the system passing from an unextended stationary condition to a maximum-extension condition during the mounting and then to a tensioning condition when steadily mounted on the wheel, the system furthermore comprising at least a return device consisting of superelastic material, embedded either in said rolling track or in said retaining arrangement in positions in which it undergoes deformation in said maximum extension condition.

## Description

### Field of the invention

The present invention relates to an anti-sliding system for tyres of land vehicles.

### Background art

As known, anti-sliding systems for road vehicles are offered on the market in different, more or less complex models. Traditionally, the most widespread models comprise a rolling track - mostly defined by a metal chain - meant to lie on the tread, and retaining members - themselves consisting of metal chains or metal wires - which tie around at least part of the tyre shoulder and which end with mutual fastening means. In front-mounting systems, the metal-chain rolling track is supported by spoke-like radial members, which are located on the front side of the wheel and are fastened to the wheel rim in a removable way.

In all these cases, the construction with metal members - which represents a merit in terms of sturdiness and duration - causes the system to be substantially inextensible. Therefore, in order to steadily apply the anti-sliding system to a wheel tyre, some specifically elastic components must also be provided. The anti-sliding system, or snow chain, can then be applied to the wheel and hence maintained or tightly tied around thereon, through the exploitation of the elastic return energy accumulated by the elastic members. In the case of standard snow chains, the elastic members consist mainly of elastomeric ropes or of spring devices, while in front-mounting systems they consist of flexible spokes or spring return members.

These elastic members have the function of allowing an elastic extension of the system during the mounting step, but also of taking up the inevitable slacks which nevertheless arise between chain and tyre (since, for economy requirements, each chain size is conceived to adapt to a plurality of tyre sizes). Exemplifyingly, in conventional chains, the elastic component also takes on the shape of a rubber ring, meant to remain on the front side of the wheel, to which a series of fastenings are circumferentially connected for linking to the rolling track.

In so-called self-tensioning chains, the elastic component is in the shape of a rubber tensioner which is connected to the open end of the front peripheral circumferential ring, for example as shown in EP1520734 in the name of the same Applicant. In front-mounting chains, for example as described in EP351362, in addition to flexible spokes, return elastic components are provided - meant to tightly adapt the rolling track to the tyre.

All these prior art elastic components, however, have various problems, linked especially to the material they are made of, to the bulk and the length thereof, which is necessarily significant.

A solution which radically changes perspective is the one represented by so-called "snow socks": a sheath of extensible fabric, which may be easily and intuitively applied to the tyre. This device, however, despite the lightness, compactness and ease of mounting thereof, does not work well on all snow-clad surfaces and has an extremely working duration.

Still considring in the sector of metal-chain systems, a highly effective solution to the above-mentioned problems has been provided by EP2170632 in the name of the same Applicant. The system therein described combines the rigidity and sturdiness typical of metal chains with a highly effective and well-dosable elastic distribution of the stresses.

In any case, it must be considered that all the elastic components traditionally employed in anti-sliding systems suffer from a typical drawback intrinsic of an elastic material. As a matter of fact, in order to be able to obtain the desired widening of the system (the circumferential elongation, to overcome the tyre shoulder, may reach, in the worst scenarios - wheels of large transport vehicles - up to 50%) without exceeding a reasonable mounting stress (the one which may be imparted by the hand of an inexperienced user), the elastic components must have a rather low elastic modulus (or Young's modulus) and a significant length (both features which translate into a low K value in the formula of the elastic reaction F=kx) - so that yielding of the material or breaking thereof do not occur.

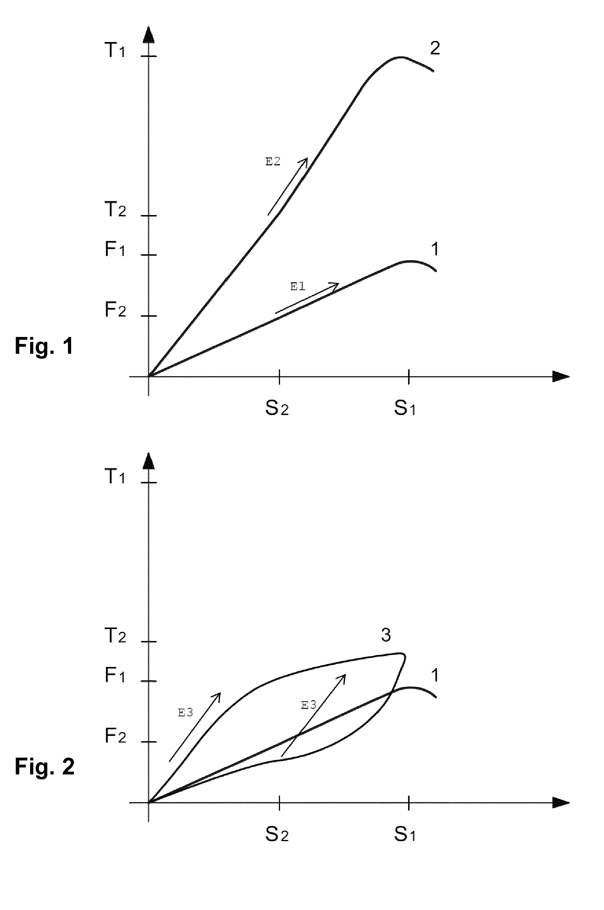

Fig. 1 shows an exemplifying diagram of a stress/strain curve for two types of elastomer, a material which the elastic members employed on the anti-sliding systems typically are made of. A first material has elastic modulus E₁ (curve 1) and a second material has elastic modulus E₂ (curve 2), with E₁ < < E₂.

Assuming to have to reach threshold deformation S₁ in order to be able to mount the system onto the tyre, with the higher-elastic-modulus material (curve 2) it is necessary to impart a much higher stress T₁ than the stress F₁ necessary to obtain the same elongation in the material with lower elastic modulus (curve 1). Once elongation S₁ has been reached, during the maximum-extension step for mounting onto the tyre, the system is then released and adheres to the tyre, elastically recovering the extension and hence settling at a elongation S₂ (the stress/strain curves are run identically both in the loading and in the un-loading step): in this condition, the system retains a residual tension, T₂ and F₂, respectively. Ideally, from the point of view of the mounting stress, the behaviour of the material with lower elastic modulus E₁ (curve 1) is preferable, even though drawbacks then arise in the rolling operation of the system, as highlighted further on.

Even in a system such as EP2170632 it is necessary to provide an adequate number of dampening inserts, to determine an elastic modulus of the entire system adequate to ensure the desired deformations, without reaching breaking or yielding loads of the elastomeric inserts.

However, this condition combines poorly with the opposite need to have a significant elastic modulus, so as to be able to have considerable reaction forces with respect to elongation during the operation. As a matter of fact, during the rolling, centrifugal forces and friction forces develop on the system, which tend to dilate the rolling track and hence to loosen the coupling of the system to the tyre: in order to face these outer loads, it would hence be desirable to have a high elastic modulus.

Returning to the examples of fig. 1, the material with lower elastic modulus (curve 1), in the elongation state S₂ would start from a level of elastic reaction F₂, following - in the loading step - an elastic modulus E₁ (= curve slope), which would produce little reactive elastic reactions (low gradient) to the deformations caused by the centrifugal rising step. Vice versa, the material with larger elastic modulus (upper curve 2), in condition S₂ would produce a much more effective elastic reaction to the deformation caused by the centrifugal rising action with a lower elastic loosening: the drawback, as already noticed, is that it is necessary to impart a very high stress (T₁) to be able to mount the system on the tyre, which is not proposable to the users.

This is the reason why in conventional snow chains it is substantially impossible to define a circumferentially-closed rolling track, but it is instead necessary to provide an opening point, which is closed back once the rolling track has been applied to the tyre tread. The elongations required to the system components may hence be small, because partly achieved through the opening/closing of the system. The elastic members are hence chosen as a compromise between the mounting conditions (when it would be suitable to have a low elastic modulus) and the operating conditions (when it would be suitable to have a high elastic modulus).

The prior art offers various examples of anti-sliding systems provided with similar elastic tensioning members, to be connected/disconnected to the other inextensible members of the chain. Among these, DE2921444U illustrates a snow chain with a rolling track provided with two tensioning members resorting to conventional extensible springs having a conventional, constant elastic modulus. Again, also DE102007015764 and US2012404 resort to retaining members provided with springs or elastic ropes which work with a conventional, constant elastic modulus.

It would instead be desirable to be able to have an anti-sliding system which has an optimised behaviour both in the mounting step - where a good elongation capacity despite modest loads is requested - and in the rolling/operation step - where reactivity to the forces arising during the rolling and more limited loosening is requested.

### Summary of the invention

The object of the present invention is hence that of providing an anti-sliding system for tyres which overcomes the prior art limits just enunciated.

Such object is achieved through a device as disclosed in its essential features in the attached main claim.

Other inventive aspects of the system are described in the dependent claims.

In particular, according to a first aspect of the invention, an anti-sliding system for a wheel of a vehicle is provided comprising a rolling track, apt to be arranged between the road surface and the tread of said wheel, and a retaining arrangement apt to constrain said rolling track to the wheel, the system passing from an unextended stationary condition to a maximum-extension condition during the mounting thereof and then to a tensioning condition when steadily mounted on the wheel, which furthermore comprises at least a return device consisting of superelastic material, embedded in said rolling track or in said retaining arrangement at regions where it is subject to deformation in said maximum extension condition.

Preferably, the device of superelastic material is made of a superelastic metal material and sized so as to work - in said tensioning condition - in correspondence of or below a relative unload plateau in the relative stress/strain diagram.

According to another aspect, the device of superelastic material is preferably in the form of a thin thread folded in a plurality of loops which define a serpentine aligned according to an axis, at the ends of said thread connecting eyelets being defined.

In the anti-sliding system, the rolling track and/or the retaining arrangement typically consist of portions of inextensible metal chain.

### Brief description of the drawings

Further features and advantages of the snow chain according to the invention will in any case be more evident from the following detailed description of a preferred embodiment of the same, given as an example and illustrated with the aid of the attached drawings, wherein:
fig. 1, as mentioned, is a diagram which shows a comparison between two elastic materials with different elastic modulus;
fig. 2 is a diagram similar to that of fig. 1 which represents the comparison with a superelastic member in an anti-sliding system according to the invention;
fig. 3 is an exemplifying diagram which represents the behaviour of a system according to the invention in the various operating steps;
figs. 4A-4C are exemplifying diagrams of the stress/straom curves of some superelastic metal alloys; and
figs. 5A and 5B are schematic top plan views of two preferred embodiments of the return device according to the invention.

### Detailed description of currently preferred embodiments

An anti-sliding system for a vehicle wheel consist - in a way known per se - of a rolling track and of a retaining arrangement designed to constrain the rolling track to the wheel.

In particular, the rolling track consists of members meant to lie on the tyre tread and hence delegated to the gripping function (grip) with respect to the road surface covered with snow or ice. The rolling track may take up various forms and consists of simple legs of metal chain (the so-called "diamonds" of conventional chains) or of nailed plates interconnected with other metal members (among which also metal chains), all members which, per se (due to the intrinsic mechanical features they must offer) are substantially inextensible. The specific configuration of the rolling track, in the gripping function thereof, is not the subject of this invention and will hence not be described in further detail. It is only wished to underline that, for a good durability and resistance of the system, it is desirable for the rolling track to comprise at least a series of metal members: that rules out, for example, that best results may be achieved with fabrics or elastic cables, as it typically occurs with snow socks.

The rolling track - as it may be guessed - has a circumferential development of the order of magnitude as the tread one; therefore, being inextensible per se, when it is constrained both internally and externally to the tyre shoulders, it is designed so as to be able to be opened when it shall be mounted onto the tyre. If instead it is part of a front-mounting system, it is sufficient for it to embed some adjustment member to take up the mounting slacks.

The retaining arrangement may in turn comprise some portions of metal chain, metal wires, tensioning devices or constraining arms meant to retain the rolling track on the tread. The retaining arrangement is configured to be tied around on the tyre sides (shoulders) and/or on the tyre front, or to be fastened in a plurality of different ways to the wheel rim, according to solutions widely known in the art. Typically, in a conventional snow chain, the retaining arrangement comprises at least
- an inner cable, closable on the rear side of the wheel,
- a front ring (consisting of chain links), closable on the front side of the wheel, and
- a plurality of connecting members (typically U-shaped hooks) which connect the rolling track to the inner cable and to the outer ring.

In the retaining arrangement, specific tensioning elastic members (elastomeric ropes, tensioning devices, springs, ...) may be provided, having the purpose of imparting an elastic action which tends to elastically return the system and to maintain it mounted on the wheel.

Also, the retaining arrangement may be openable, in one or more regions, in correspondence of the opening regions (if any) of the rolling track.

According to the invention, either the rolling track or the retaining arrangement include one or more return devices made of superelastic materials or "shape-memory" materials. These devices are arranged so that, during the mounting step of the anti-sliding system onto the tyre, they undergo tensioning up to loading levels above their elongation linear deformation behaviour. That allows to exploit a peculiar feature of the tension characteristics thereof, which determines a synergistic and advantageous effect in this specific application, as will be illustrated better further on.

Under superelastic materials in this context, as in general in the literature, those materials are understood which behave differently from elastic materials having a constant elastic modulus (with resulting linear elastic behaviour) and which, in particular, have different stress/strain curves in the two loading and unloading steps. As a matter of fact, superelastic materials, also called pseudoelastic-behaviour materials or shape-memory alloys, SMA, are metal alloys (for example Ni-Ti, Au-Cd, Cu-Zn-Ni, Cu-Al-Ni) which display an original behaviour in the field of stress/strain. Undergoing tension stress, they display - at preset working temperatures, above the limit temperature of the martensitic phase - an initial linear elastic behaviour, followed by a non-linear, apparently plastic behaviour (upon exceeding a specific deformation threshold, where a phase transformation occurs: from the austenitic phase to the metastable, martensitic one), with a hysteresis in the loading and unloading steps. Following loading and unloading cycles, superelastic materials nevertheless return to their original shape, even though they are capable of deforming beyond 10% (due to the non-linear behaviour): in this they differ both from conventional elastic metals and from anelastic materials.

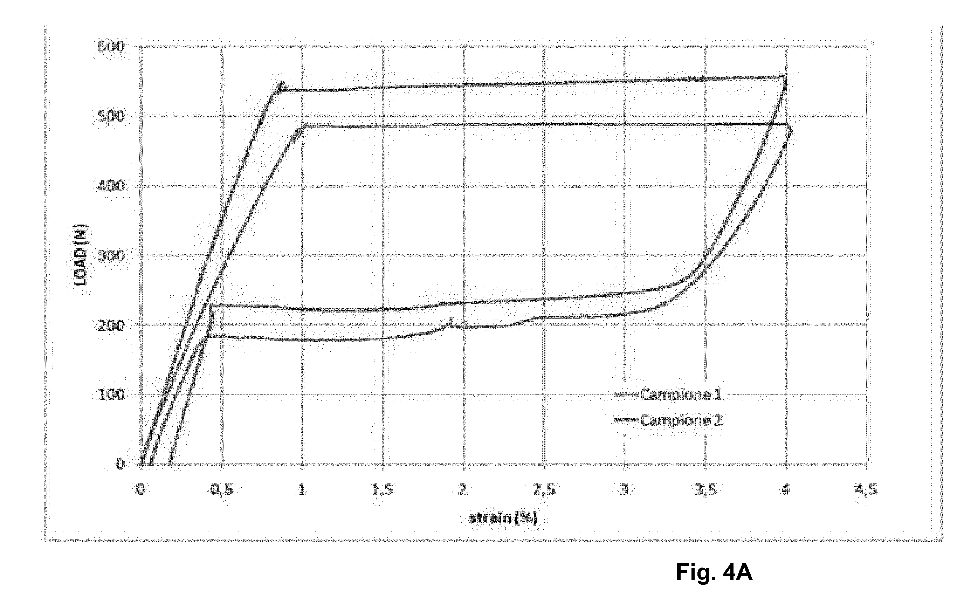

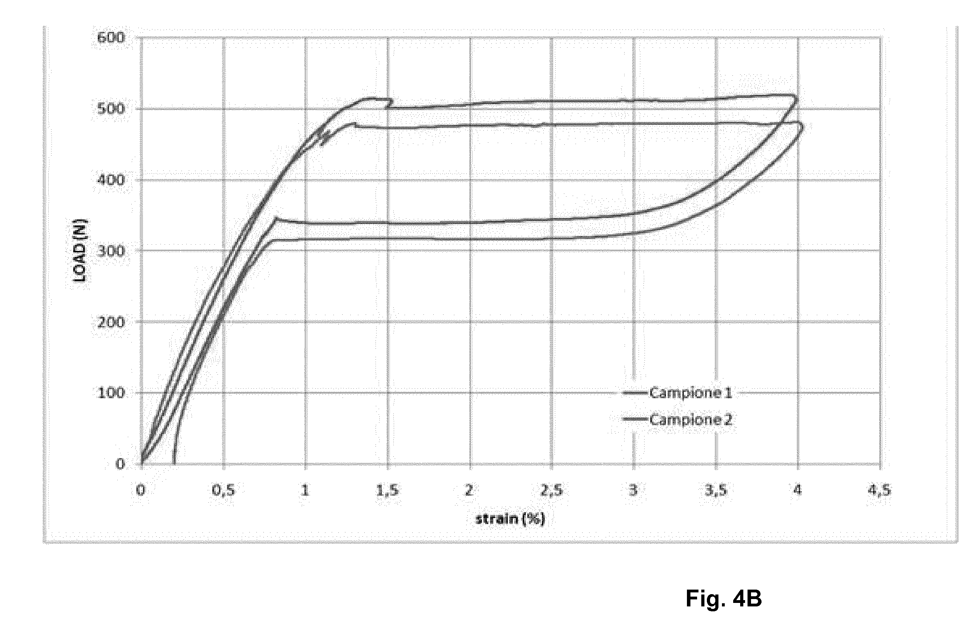

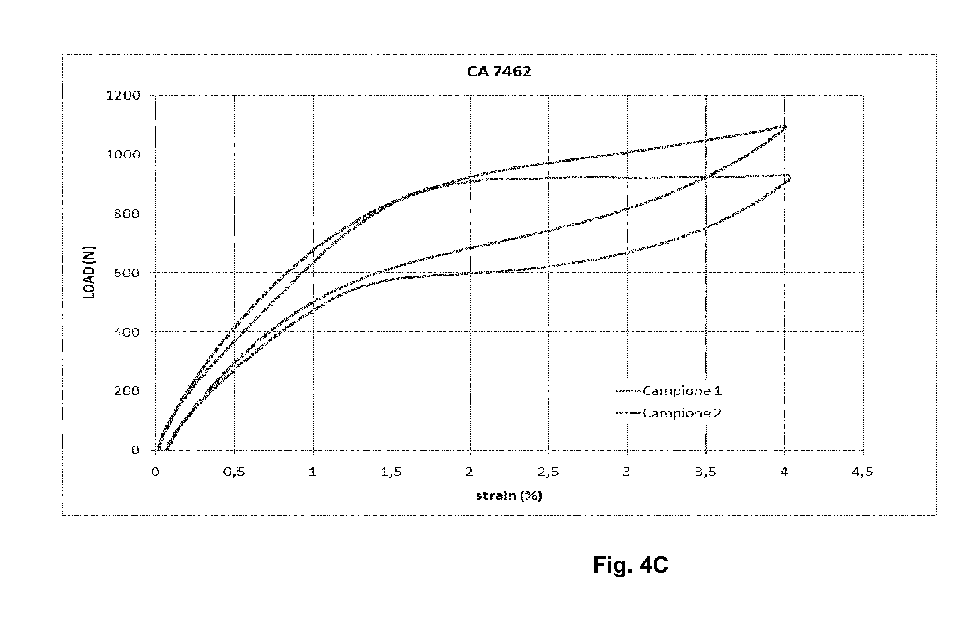

Some exemplifying diagrams of the behaviour under stress/strain of a superelastic metal (NiTi) are reported in figs. 4A-4C. As can be clearly seen in these pictures, the loading and unloading curves do not overlap, but have a more or less pronounced hysteresis. In particular, a first loading step having a linear development is followed by a second loading step under almost constant stress (called "upper plateau") or in any case having a very low elastic modulus. The loading cycle similarly has a first non-linear unload step, with very low elastic modulus, which represents a lower "plateau", followed by a second linear unloading step. The "plateau" areas, both in the loading step and in the unloading one, are substantially constant-stress areas, even though at two different levels (upper and lower) and represent a significant peculiarity of these materials.

Particularly significant, for the purposes of the application of the present invention, is also the fact that - despite following a hysteresis line, with well-marked lower and upper plateau - the elastic modulus during the loading step remains constant, with a linear behaviour, only below the upper plateau load.

That means that, once a maximum stress in the device made of superelastic material is reached, a significant contraction of the same may be obtained during the unloading step (lower plateau), but a significant elastic modulus remains available (equal to the one available on the linear-behaviour portion) whenever the device is loaded again.

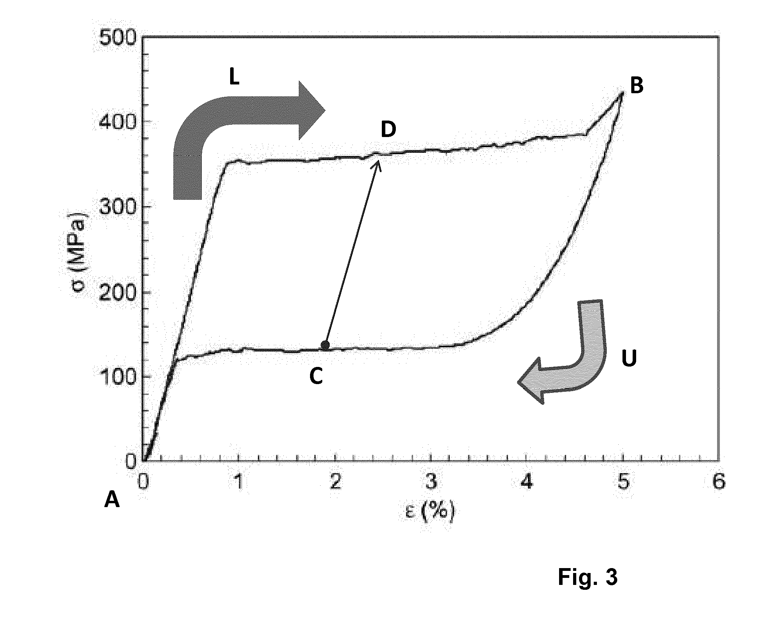

According to the invention, the return device made of superelastic material is embedded in the rolling track or in the retaining arrangement, so as to experience an important deformation during the mounting step of the anti-sliding system onto the vehicle wheel. This deformation leads the device to be loaded beyond the linear behaviour thereof, hence ideally in the proximity of the terminal part of the upper loading plateau. With exemplifying reference to fig. 3, in the mounting step the upper portion of the stress/strain curve identified by arrow L is run. In order to mount the anti-sliding system onto the wheel an extending action is hence imparted which leads (with stresses comparable to or generally lower than those of a prior-art elastic tensioner) to obtain a strong deformation of the device, from point A to point B, following the upper curve (arrow L). With the system fully extended, the necessary slack of the inner/outer rings and/or of the rolling track with respect to the tyre is obtained, in order to be able to comfortably mount the system onto the wheel. Releasing the extending stress, the load on device is released and it recovers the deformation following the lower curve (arrow U) towards point (exemplifying assumption) C which is found on the lower plateau. In this condition, the device imparts a residual tension (equal to the load valve of the lower plateau) useful to maintain the anti-sliding system steadily mounted on the tyre, moreover with an excellent capacity of taking up wide slacks through minimal load reductions. Moreover, in this condition the device is capable of reacting to loading stress with a remarkable elastic modulus (E3 in fig. 2), equal to the one which is found in the linear curve portion: in other words, from point C, the development of the stress/strain curve under loading follows the line CD with a slope comparable to the one existing in the initial linear portion. If stress is hence applied to the system tending to loosen the chain (for example, the typical centrifugal raising stress, which appears during wheel rolling, or other forces linked to frictions and rolling), the device promptly opposes itself with an important elastic modulus (C-D line), apt to prevent an excessive release or loosening of the anti-sliding system. The elastic modulus under load (E3) is hence far greater than in the case of a conventional elastic member which requires the same stress to reach maximum deformation (S₁ in fig. 2).

The slope of the plateaus is one of the features which may in any case be tailored through a suitable choice of the material (also based on operating temperatures): that allows to suitably adjust the upper plateau, so that - should the device undergo a sudden load exceeding the value of the upper plateau (hence greater than the value in D) - the slope (elastic modulus) is sufficient to avoid a sudden and wide extending of the device along the upper plateau.

The metal alloy of the superelastic material is hence accurately chosen so as to achieve - based on the sizing provided by the return device and on operating temperatures (of the order of -25°C to +25°C) - the most suitable stress/strain curve; in particular, the curve is chosen based on the admissible stress in the mounting step and to obtain a residual deformation, after the mounting, which is preferably found in the lower plateau area of the unloading curve. This condition in the stress/strain diagram is favourable because it allows to recover a great deformation with small changes of forces, adapting well to the movements of the anti-sliding system during the starting step, which thus remains better adhering to the tyre.

For such purpose, for example, it has been found that NiTi alloys, with a Ni percentage varying between 50.4 and 51.50, or NiTiCu, NiTiCr alloys are particularly advantageous in this application.

The return device made of superelastic material may take on a variety of shapes and different locations within the anti-sliding system. It may be embedded in a reduced-bulk member, to be arranged along the front or rear rings of the system, or along the rolling track. Alternatively, it may have a much more significant bulk, for example taking on the appearance of a true constraining link between wheel rim and rolling track. It is understood that, from an industrial point of view, a compromise choice must then be made between effectiveness of the device and cost thereof.

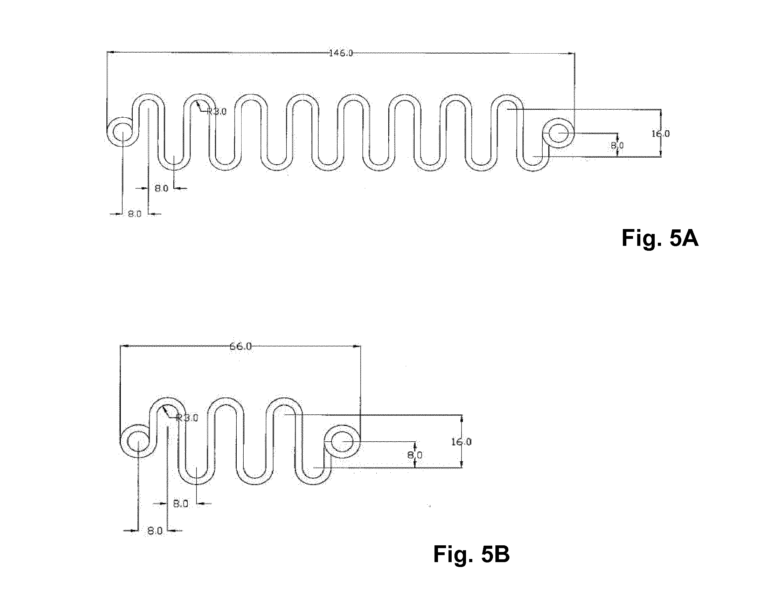

Following wide experimentation, the Applicant has identified that the return device of superelastic material may advantageously have the shape set forth in figs. 5A or 5B. In particular, a small-diameter thread of superelastic material, for example 6 mm, is folded in the shape of a serpentine which extends along a reference axis; at the ends two connecting eyelets are provided. Such a device may be integrated along the front circumferential chain of a conventional snow chain. In particular, a short version (fig. 5B) may be provided, for example 66 mm long from eyelet to eyelet, to be inserted into each portion of circumferential chain between two hooks of the diamond-shaped groups of the tread. Six of these return devices according to the invention are hence typically installed on the chain. According to an alternative embodiment, a long version (fig. 5A) is provided, for example 146 mm long from eyelet to eyelet, to be installed on each semi circumference of the circumferential front chain. In such case, two of these return devices according to the invention are installed on the chain.

These singular shapes advantageously allow to adjust the plateaus and the relative slope, which may affect the definition of the opening and closing forces of the anti-sliding device and upon the change of the operating temperature.

It must be noticed that, due to significant deformation tolerable by the device according to the invention, the anti-sliding device may also do without further tensioning members made of elastic materials (such as elastomeric ropes) and, in extreme cases, it may also be devoid of any opening point.

As can be clearly understood from the disclosure provided above, through the device according to the invention the objects set forth in the premises are perfectly achieved. The elastic behaviour of the device is advantageous during the mounting step, because it allows to achieve wide deformations through relatively small stresses, but it is equally favourable during rolling, because it prevents undesired rising and loosening of the system under the action of the centrifugal forces and of the friction forces.

Through a suitable configuration of the anti-sliding system, a wide extending of the circumferential inner ring may be obtained, such as to be able to mount the system onto the wheel without having to provide opening points (similarly to what occurs with the sock-type anti-sliding systems), despite employing connecting members and rolling track in metal chain links.

However, it is understood that the invention is not limited to the particular embodiments illustrated above, which make up only non-limiting examples of the scope of the invention, but that a number of variants are possible, all within the reach of a person skilled in the field, without necessarily departing from the scope of the invention as defined by the attached claims.

For example, although in the drawings reference has been made to a system which has a maximum load above that of a corresponding prior-art system (the deformation being equal), that is not binding and the actual values of stresses and deformation may be suitably defined acting on the choice of the superelastic alloy and on the sizing, taking into due consideration also the operating temperatures of the system.

Finally, by exploiting the principle taught here, it is possible to conceive a wide variety of shapes and configurations of the return device, all comprised in the scope of protection as defined in the claims attached herewith.

## Claims

1. Anti-sliding system for a vehicle wheel comprising a rolling track, apt to be arranged between the ground and the tread of said wheel, and a retaining arrangement apt to constrain said rolling track to the wheel, the system passing from an unextended, stationary condition to a maximum-extension condition during the mounting and then to a tensioning condition when steadily mounted on the wheel, **characterised in that** it furthermore comprises at least a return device made of superelastic material, either in said rolling track or in said retaining arrangement in positions in which it undergoes deformation in said maximum-extension condition.

2. Antisliding system as claimed in claim 1, wherein said at least one device made of superelastic material is made of a superelastic metal material and sized so as to work, in said tensioning condition, in correspondence of or below a relative unloading plateau in the relative stress/strain diagram thereof.

3. Antisliding system as claimed in claim 1 or 2, wherein said at least one device of superelastic material is in the shape of a thin thread folded in a plurality of loops which define a serpentine aligned according to an axis, connecting eyelets being defined at the ends of said thread.

4. Antisliding system as claimed in any one of the preceding claims, wherein at least said rolling track and/or said retaining arrangement consists of portions of inextensible metal chain.
